(19) Europäisches Patentamt
European Patent Office
Office européen des brevets

(11) Veröffentlichungsnummer: **0 590 660 B1**

(12) # EUROPÄISCHE PATENTSCHRIFT

(45) Veröffentlichungstag der Patentschrift: **14.06.95**

(51) Int. Cl.[6]: **C09K 3/10**, C08L 101/00, C08L 33/06

(21) Anmeldenummer: **93115794.5**

(22) Anmeldetag: **30.09.93**

(54) **Dichtungsmassen auf der Grundlage von Polymerisaten ethylenisch ungesättigter Monomeren.**

(30) Priorität: **01.10.92 DE 4233077**

(43) Veröffentlichungstag der Anmeldung:
**06.04.94 Patentblatt 94/14**

(45) Bekanntmachung des Hinweises auf die Patenterteilung:
**14.06.95 Patentblatt 95/24**

(84) Benannte Vertragsstaaten:
**AT BE CH DE FR GB IT LI**

(56) Entgegenhaltungen:
**EP-A- 0 029 947**
**EP-A- 0 220 841**
**EP-A- 0 343 436**
**WO-A-90/12065**
**US-A- 4 496 696**

(73) Patentinhaber: **Wacker-Chemie GmbH**
**Hanns-Seidel-Platz 4**
**D-81737 München (DE)**

(72) Erfinder: **Sommer, Oswin, Dr.**
**Karl-Gros-Strasse 29**
**D-84489 Burghausen (DE)**
Erfinder: **Dubois, Michel**
**71 Avenue Kellermann**
**F-Soisy Sous Montmorency (FR)**
Erfinder: **Dorsch, Norman**
**Fuchshausen 148**
**D-84489 Burghausen (DE)**
Erfinder: **Strasser, Alois**
**Jägerweg 1**
**D-84489 Burghausen (DE)**

**EP 0 590 660 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Dichtungsmassen auf der Grundlage von Polymerisaten ethylenisch ungesättigter Monomeren und ein Verfahren zu deren Herstellung.

In EP-A-220 841 sind Dichtungsmassen auf der Grundlage von Acrylat-Copolymer-Dispersionen beschrieben, welche durch einen Gehalt an Organoaminosilanen zusammen mit hochdispersen Kieselsäuren eine verbesserte Eigenhaftung, Wasserfestigkeit und Lagerbeständigkeit aufweisen.

In EP-A2 343 436 werden Dichtungsmassen, die Acrylatlatex und lineare Polysiloxane enthalten, beschrieben und ihre Haftungseigenschaften auch unter dem Einfluß von Wasser nicht verlieren sollen.

Die bekannten Fugendichtungsmassen, die als Bindemittel Polymerisate ethylenisch ungesättigter Monomeren in Form wäßriger Dispersionen enthalten, weisen den gravierenden Nachteil auf, daß ihr Abbindevermögen bei tiefen Temperaturen extrem langsam ist. Bei Temperaturen um den 0 ° C-Punkt stellt man ein verzögertes Vulkanisationsverhalten fest, das sich über viele Stunden erstreckt. Bei Minusgraden kann es oft tagelang dauern, bis die Pasten zu einem Zustand vernetzen, der der Matrix so viel innere Festigkeit gibt, daß diese auch beansprucht werden kann. Diese Produkteigenschaft schränkt für viele Praxisanwendungen den Einsatz dieser Stoffklasse ein. Gerade in Gegenden, wo längere Zeiten tiefe Temperaturen vorherrschen, sind diese Dichtungsmassen einem erhöhten Risiko ausgesetzt. Sind die Dichtungsmassen noch nicht genügend abgebunden und setzt zwischenzeitlich bei Außenapplikationen Regen ein, so können diese Produkte vom Regen ausgewaschen werden, d.h. die Dichtungsmasse löst sich auf, Bindemittel und alle übrigen Stoffingredienzien werden ausgetragen.

Bei tiefen Temperaturen ist die Verdunstung des Wassers stark herabgesetzt. Ist die relative Luftfeuchtigkeit der Umgebung noch dazu verhältnismäßig hoch, so wird darüber hinaus die Vernetzungsgeschwindigkeit um ein weiteres verzögert.

Der vorliegenden Erfindung liegt die Aufgabe zugrunde, Dichtungsmassen auf der Grundlage von Dispersionen von Polymerisaten ethylenisch ungesättigter Monomeren bereitzustellen, welche insbesondere bei tiefen Temperaturen schnell abbinden, früh regenfest sind und auf dem Untergrund fest haften.

Die Erfindung betrifft Dichtungsmassen auf der Grundlage von Dispersionen von Polymerisaten ethylenisch ungesättigter Monomeren umfassend die Komponenten

a) Polymerisate ethylenisch ungesättigter Monomeren,
b) 0,1 bis 5 Gew.-% verzweigte Organopolysiloxane, bezogen auf das Gesamtgewicht der Dichtungsmassen,
c) Dispergiermittel,
d) Füllstoff und
e) Wasser.

Der Zusatz an verzweigten Organopolysiloxanen (b) bewirkt, daß die Dispersionen schneller abbinden, d.h. daß die Dichtungsmassen schon nach kurzer Zeit eine in sich geschlossene plastische Oberfläche ausbilden, die mechanisch belastet werden kann und eine hohe Frühregenfestigkeit besitzt.

Bevorzugte Organopolysiloxane (b) besitzen neben SiC gebundenen Kohlenwasserstoffresten funktionelle Gruppen, beispielsweise $C_1$-$C_6$-Alkoxygruppen, geradkettige oder verzweigtkettige, gegebenenfalls substituierte Aminoalkylgruppen, wie

$H_2N(CH_2)_n$-
$H_2N(CH_2)_nNH(CH_2)_n$-
$(CH_3)_2N(CH_2)_n$-
$H(NHCH_2CH_2)_3$-,
n-$C_4H_9NHCH_2CH_2NHCH_2CH_2$-,
$(CH_3CH_2)_2N(CH_2)_n$-,

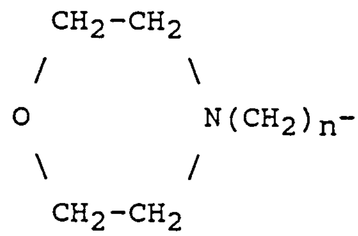 und

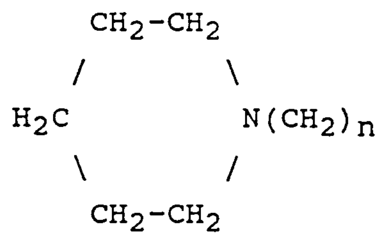 ,

wobei n Werte von 1 bis 12, insbesondere von 2 bis 4, aufweist.

Die Haftung der erfindungsgemäßen Dichtungsmassen, insbesondere auf saugenden porösen Untergründen, ist besonders gut, wenn die Organopolysiloxane (b) aminofunktionelle Gruppen aufweisen.

Organopolysiloxane (b) der allgemeinen Formel (I),

$$R_aSi(R^1)_bO_{\frac{4-a-b}{2}} \quad ,$$

in der R gleiche oder verschiedene einwertige, gegebenenfalls substituierte über SiC gebundene $C_1$-$C_{18}$-Kohlenwasserstoffreste, $R^1$ gleiche oder verschiedene $C_1$-$C_6$-Alkoxygruppen oder Aminoalkylgruppen, a 0, 1, 2 oder 3, durchschnittlich 0,75 bis 1,5, und b 1, 2 oder 3, durchschnittlich 0,2 bis 2,0, bedeutet, sind besonders bevorzugt.

Vorzugsweise enthalten die Reste R höchstens 12 Kohlenstoffatome je Rest. Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der $\alpha$- und der $\beta$-Phenylethylrest.

Beispiele für substituierte Reste R sind Cyanalkylreste, wie der $\beta$-Cyanethylrest, und halogenierte Kohlenwasserstoffreste, beispielsweise Halogenalkylreste, wie der 3,3,3-Trifluor-n-propylrest, der 2,2,2,2',2',2'-Hexafluorisopropylrest, der Heptafluorisopropylrest, und Halogenarylreste, wie der o-, m- und p-Chlorphenylrest.

Wegen der leichteren Zugänglichkeit sind vorzugsweise mindestens 50 % der Reste R, insbesondere mindestens 80 % der Reste R, Methylreste.

Beispiele für $C_1$-$C_6$-Alkoxygruppen sind die Methoxy-, Ethoxy-, n-Propoxy-, Isopropoxy-, n-Butoxy-, iso-Butoxy-, sec.-Butoxy-, tert.-Butoxygruppe; Pentyloxygruppen, wie die n-Pentyloxygruppe und Hexyloxygruppen, wie die n-Hexyloxygruppe. Die Methoxy- und Ethoxygruppen sind besonders bevorzugt.

Bevorzugte Aminoalkylgruppen sind die vorgenannten Beispiele für Aminoalkylgruppen.

In der allgemeinen Formel I bedeutet a vorzugsweise durchschnittlich 0,9 bis 1,1 und b vorzugsweise 0,8 bis 1,4, insbesondere 1,0 bis 1,2.

Es kann ein Organopolysiloxan (b), vorzugsweise eines der vorstehenden Formel eingesetzt werden; es können auch mehrere Organopolysiloxane eingesetzt werden.

Insbesondere bevorzugt sind Organopolysiloxane (b) der allgemeinen Formel (I), bei denen $R^1$ teilweise $C_1$-$C_6$-Alkoxygruppen und teilweise Aminoalkylgruppen, insbesondere im Verhältnis 1:10 bis 10:1, bedeutet. Bei der Verwendung derartiger Organopolysiloxane (b) erhält man Dichtungsmassen, die besonders schnell

abbinden und eine besonders gute Eigenhaftung, insbesondere auf porösen alkalischen oder metallischen Untergründen, aufweisen.

Derartige Organopolysiloxane (b) können durch Zusammenkondensieren von alkoxygruppen- und aminoalkylgruppenhaltigen Silanen oder Siloxanen hergestellt werden.

Bevorzugte Beispiele für Organopolysiloxane (b) der allgemeinen Formel I sind solche, die durch Umsetzung von Methyltrichlorsilan oder Phenyltrichlorsilan mit Ethanol in Wasser erhältlich sind, z.B. solche der Summenformel

$CH_3Si(OC_2H_5)_{0,8}O_{1,1}$

oder

$C_6H_5Si(OC_2H_5)_{0,72}O_{1,14}$

oder durch Reaktion dieser Umsetzungsprodukte mit einem aminofunktionellen Silan, das beispielsweise die vorstehend genannten Aminoalkylgruppen aufweist, vorzugsweise Aminopropyltriethoxysilan, Aminoethyltrimethoxysilan oder Aminopropyltrimethoxysilan.

Vorzugsweise haben die Organopolysiloxane (b) und damit auch die Organopolysiloxane der Formel (I) eine Viskosität von 10 bis 2000 $mm^2/s$ bei 25 °C, insbesondere 15 bis 200 $mm^2/s$ bei 25 °C.

Wenn die Dichtungsmassen weniger als 0,1 Gew.-% verzweigte Organopolysiloxane, bezogen auf das Gesamtgewicht der Dichtungsmassen, enthalten, ist die Wirkung gering. Wenn die Dichtungsmassen mehr als 5 Gew.-% verzweigte Organopolysiloxane enthalten, beginnen die Dichtungsmassen vorzeitig bei der Lagerung zu vernetzen. Vorzugsweise enthalten die Dichtungsmassen 0,3 bis 1,5 Gew.-% verzweigte Organopolysiloxane, bezogen auf das Gesamtgewicht der Dichtungsmassen.

Die erfindungsgemäß einsetzbaren Polymerisate ethylenisch ungesättigter Monomeren (a) umfassen alle Polymerisate ethylenisch ungesättigter Monomeren, die als Bindemittel für in Form von Dispersionen eingesetzte Dichtungsmassen geeignet sind, insbesondere die mit dem Sammelbegriff Acrylat bezeichneten Bindemittel.

Beispiele geeigneter Polymerisate sind Homo- oder Copolymerisate von $\alpha,\beta$-ungesättigten Monocarbonsäuren mit einer Kohlenstoffkette zwischen 3 und 10 Kohlenstoffatomen, wie Acrylsäure, Methacrylsäure, Croton- und Isocrotonsäure und deren Ester mit primären oder sekundären Alkoholen mit 1 bis 12 C-Atomen; von $\alpha,\beta$-ungesättigten Dicarbonsäuren mit 4 bis 10 Kohlenstoffatomen, wie beispielsweise Malein-, Fumar- und Itakonsäure und deren Mono- und Diester mit primären oder sekundären Alkoholen mit 1 bis 12 C-Atomen; von den Amiden der vorstehenden Carbonsäuren; von Vinylestern mit 2 bis 12 C-Atome enthaltenden Carbonsäuren; von stickstoffhaltigen, monoethylenisch ungesättigten Monomeren, wie Acrylnitril, Acrylamid, Methacrylamid, N-Methylolacrylamid, N-Methylolmethacrylamid, N-Methylolallylcarbamat, N-Methylolalkylether, Mannichbasen oder N-Methylolester von N-Methylol(meth)acrylamid bzw. N-Methylolallylcarbamat; von Carbonylgruppen aufweisenden ethylenisch ungesättigten Monomeren, wie Diacetonacryl- und -Methacrylamid, Acrolein, Formylstyrol, Diacetonacrylat, Acetonylacrylat, 2-Hydroxypropylacrylat oder -acetylacetat und Vinylalkylketonen, beispielsweise Vinylmethylketon, Vinylethylketon und Vinylisobutylketon.

Bevorzugte Acrylsäureester enthalten 4 bis 8 Kohlenstoffatome im Alkoholrest.

Beispiele für primäre oder sekundäre Alkohole mit 1 bis 12 C-Atomen, die mit $\alpha,\beta$-ungesättigten Mono- und Dicarbonsäuren verestert sein können, sind Methanol, Ethanol, n-Propanol, iso-Propanol, n-Butanol, iso-Butanol, tert.-Butanol, n-Hexanol, 2-Ethylhexanol, Cyclohexanol, Decanol und Laurylalkohol.

Bevorzugte Vinylester sind Vinylbutyrat, Vinyldecanoat, Vinyllaurat und insbesondere Vinylacetat und Vinylpropionat.

Nur als Comonomere zusammen mit vorstehend genannten Monomeren geeignete ethylenisch ungesättigte Monomere sind die Olefine, wie Ethylen, Propylen, Butylen und Butadien; Vinylhalogenide und Vinylidenhalogenide, wie beispielsweise Vinylfluorid, Vinylidenfluorid, Vinylidenchlorid und Vinylaromaten, wie Styrol.

Bei der Verwendung der nur als Comonomeren geeigneten ethylenisch ungesättigten Monomeren sollte deren Menge maximal 50 Gew.-%, vorzugsweise maximal 20 Gew.-%, bezogen auf das Gesamtgewicht des Monomergemisches der Komponente (a), betragen.

Bevorzugte Komponenten (a) sind Homo- oder Copolymerisate von Acrylsäure und Methacrylsäure und deren Ester aus primären oder sekundären Alkoholen mit 1 bis 12 C-Atomen mit gegebenenfalls anderen ethylenisch ungesättigten Monomeren, wie Olefinen oder Vinylestern mit 2 bis 12 C-Atomen.

Die Polymerisate ethylenisch ungesättigter Monomeren (a) werden vorzugsweise durch Polymerisation der Monomeren in wäßriger Emulsion unter Verwendung der üblichen Dispergierhilfsmittel und der üblichen radikalbildenden Polymerisationsinitiatoren nach den in Ullmanns Encyclopädie der technischen Chemie, 4. Auflage, Verlag Chemie, Weinheim, Band 19, Kap. 5.4, beschriebenen Monomerenzulaufverfahren oder Emulsionszulaufverfahren bei den üblichen Temperaturen hergestellt. Die durch Emulsionspolymerisation hergestellten Dispersionen der Polymerisate ethylenisch ungesättigter Monomeren (a) enthalten vorzugsweise 40 bis 80 Gew.-%, insbesondere 55 bis 70 Gew.-%, Polymerisate.

Die erfindungsgemäß einsetzbaren Dispergiermittel (c) sind an sich bekannt. Sie umfassen alle für die Herstellung von Dispersionen von Polymerisaten ethylenisch ungesättigter Monomeren geeigneten Dispergiermittel.

Beispiele für Dispergiermittel (c) sind Schutzkolloide, wie Polyvinylalkohol, der gegebenenfalls bis zu 40 Mol-% Acetylgruppen enthält, Gelatine und Cellulosederivate, wie wasserlösliche Methylcellulose, Ammonium- und Alkalimetallsalze von Polyacrylaten, Ammonium- und Alkalimetallpolyphosphate und oberflächenaktive Substanzen, wie Emulgatoren.

Als anionische Emulgatoren eignen sich besonders:

1. Alkylsulfate, besonders solche mit einer Kettenlänge von 8 bis 18 C-Atomen und Alkylethersulfate mit 8 bis 18 C-Atomen im hydrophoben Rest und 1 bis 40 Ethylenoxid(EO)- bzw. Propylenoxid(PO)einheiten.
2. Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder Alkylphenolen mit 4 bis 15 C-Atomen; ggf. können diese Alkohole oder Alkylphenole auch mit 1 bis 40 EO-Einheiten ethoxyliert sein.
3. Alkali- und Ammoniumsalze von Carbonsäuren mit 8 bis 20 C-Atomen im Alkyl-, Aryl-, Alkaryl- oder Aralkylrest.
4. Phosphorsäureteilester und deren Alkali- und Ammoniumsalze, besonders Alkyl- und Alkarylphosphate mit 8 bis 20 C-Atomen im organischen Rest, Alkylether- bzw. Alkaryletherphosphate mit 8 bis 20 C-Atomen im Alkyl- bzw. Alkarylrest und 1 bis 40 EO-Einheiten.

Als nichtionische Emulgatoren eignen sich besonders:

5. Alkylpolyglycolether, vorzugsweise solche mit 8 bis 40 EO-Einheiten und Alkylresten von 8 bis 20 C-Atomen.
6. Alkylarylpolyglycolether, vorzugsweise solche mit 8 bis 40 EO-Einheiten und 8 bis 20 C-Atomen in den Alkyl- und Arylresten.
7. Ethylenoxid/Propylenoxid(EO/PO)-Blockcopolymere, vorzugsweise solche mit 8 bis 40 EO- bzw. PO-Einheiten.
8. Fettsäuren mit 6 bis 24 C-Atomen.
9. Naturstoffe und deren Derivate, wie Lecitin, Lanolin, Saponine, Cellulose; Cellulosealkylether und Carboxyalkylcellulosen, deren Alkylgruppen jeweils bis zu 4 Kohlenstoffatome besitzen.
10. Polare Gruppen enthaltende lineare Organo(poly)siloxane, insbesondere solche mit Alkoxygruppen mit bis zu 24 C-Atomen und/oder bis zu 40 EO- und/oder PO-Gruppen.

Als kationische Emulgatoren eignen sich besonders:

11. Salze von primären, sekundären und tertiären Fettaminen mit 8 bis 24 C-Atomen mit Essigsäure, Schwefelsäure, Salzsäure und Phosphorsäuren.
12. Quarternäre Alkylbenzylammoniumsalze, insbesondere solche, deren Alkylgruppe 6 bis 24 C-Atome besitzt, insbesondere die Halogenide, Sulfate, Phosphate und Acetate.
13. Alkylpyridinium-, Alkylimidazolinium- und Alkyloxazoliniumsalze, insbesondere solche, deren Alkylkette bis zu 18 C-Atome besitzt, speziell die Halogenide, Sulfate, Phosphate und Acetate.

Die Dispergiermittel werden vorzugsweise in Mengen von 1 bis 20 Gew.-%, insbesondere 3 bis 10 Gew.-%, bezogen auf die fertige Dichtungsmasse, eingesetzt.

Die erfindungsgemäß einsetzbaren Füllstoffe (d) umfassen alle für die Herstellung von Dichtungsmassen geeignete Füllstoffe. Beispiele für Füllstoffe sind nicht verstärkende Füllstoffe, also Füllstoffe mit einer BET-Oberfläche von bis zu 50 $m^2/g$, wie Quarzmehl, Kreide, Talkum, Dolomit, Kaolin, Diatomeenerde, Calciumsilikat, Zirkoniumsilikat, Zeolithe, Montmorrillonite, wie Bentonite, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver; verstärkende Füllstoffe, also Füllstoffe mit einer BET-Oberfläche von mehr als 50 $m^2/g$, wie pyrogen hergestellte Kieselsäure, gefällte Kieselsäure und Silicium-Aluminium-Mischoxide großer BET-Oberfläche; faserförmige Füllstoffe, wie Asbest sowie Kunststoffasern. Es kann eine Art von Füllstoff, es kann auch ein Gemisch von mindestens zwei Füllstoffen eingesetzt werden.

Die erfindungsgemäßen Dichtungsmassen enthalten vorzugsweise 30 bis 70 Gew.-%, insbesondere 45 bis 60 Gew.-%, an Füllstoffen (d).

Außer den vorstehend genannten Bestandteilen können die erfindungsgemäßen Dichtungsmassen auch weitere in Dichtungsmassen übliche Zusätze, wie Pigmente, Verdickungsmittel, Insektizide, Fungizide, Entschäumer und Lichtschutzmittel, enthalten.

Beispiele für geeignete Pigmente sind Titandioxid und Eisenoxid, die beispielsweise in Mengen von 0,2 bis 5 Gew.-% in den erfindungsgemäßen Dichtungsmassen enthalten sein können.

Beispiele für geeignete Weichmacher sind Ester der Phthalsäure oder Adipinsäure, niedermolekulare Polyisobutane und Polyalkylphenylether, die beispielsweise in Mengen von 5 bis 20 Gew.-% in den erfindungsgemäßen Dichtungsmassen enthalten sein können.

Bei der Herstellung der erfindungsgemäßen Dichtungsmassen werden vorzugsweise die Polymerisate ethylenisch ungesättigter Monomeren (a) unmittelbar nach der Herstellung mit den verzweigten Organopolysiloxanen (b) versetzt. Die Polymerisate (a) werden vorzugsweise als Dispersion eingesetzt. Die Komponenten Dispergiermittel (c), Füllstoff (d), Wasser (e) und gegebenenfalls Zusätze können in beliebiger Reihenfolge zugemischt werden. Das Mischen erfolgt in handelsüblichen Mischvorrichtungen, beispielweise in einem Vakuumplaneten-Mischer.

Die erfindungsgemäßen Dichtungsmassen können für den Innen- und Außeneinsatz, beispielsweise auf Holz, Metallen, insbesondere jedoch auf Ziegelmauern, Beton, mit Mörtel auf Grundlage von Kalk und Sand verputztem Mauerwerk, Natursteinen und anderen Baustoffen, verwendet werden. Die Anwendung kann auf beliebige Weise erfolgen, vorzugsweise durch Spritzen.

Beispiele

In den nachstehend beschriebenen Beispielen beziehen sich alle Viskositätsangaben auf eine Temperatur von 25 °C. Sofern nicht anders angegeben, werden die nachstehenden Beispiele bei einem Druck der umgebenden Atmosphäre, also etwa bei 1000 hPa, und bei Raumtemperatur (RT), also bei etwa 20 °C, bzw. bei einer Temperatur, die sich beim Zusammengeben der Reaktanden bei Raumtemperatur ohne zusätzliche Heizung oder Kühlung einstellt, durchgeführt. Des weiteren beziehen sich alle Angaben von Teilen und Prozentsätzen, soweit nichts anderes angegeben ist, auf das Gewicht.

Aminzahl = Anzahl der ml 1-n-HCl, die zum Neutralisieren von 1 g Substanz erforderlich sind

**Herstellung der verzweigten Organopolysiloxane mit funktionellen Gruppen**

64,0 Gew.-Teile Teilhydrolysat von Methyltriethoxysilan mit einem Molverhältnis Methylgruppen/Ethoxygruppen = 55/45 und einer Viskosität von 24,5 $mm^2$/sec bei 25 °C
27,0 Gew.-Teile Aminopropyltriethoxysilan
9,0 Gew.-Teile Ethanol
0,05 Gew.-Teile ethanolische KOH
wurden 3 Stunden am Rückfluß bei 85 °C verkocht. Anschließend wurde mit Salzsäure neutralisiert, das entstehende Salz abfiltriert und der Alkohol abdestilliert.

Der Rückstand hatte eine Viskosität, die zwischen 20 und 40 $mm^2$/s lag, die Aminzahl lag knapp über 1.

**Beispiel 1**

Zu einer handelsüblichen weichmacherfreien Acrylatcopolymerdispersion auf Basis von 90 % 2-Ethylhexylacrylat mit einem Festgehalt von 60 Gew.-% und einer Viskosität von 5000 mPa.s (gemessen nach Brookfield bei 20 U/min und 23 °C) und einem pH-Wert von 5 (Vinnapas$^R$-Dispersion AF 75 von Wacker-Chemie GmbH, München), die man in einem Vakuumplaneten-Mischer vorlegte, setzte man nachstehende Materialien zu. Die Herstellung der Dichtungsmasse erfolgte in einem Vakuumplaneten-Mischer. Nach Homogenisierung der Mischung wurde bei evakuiertem Gerät noch etwa 10 - 20 Minuten weitergemischt, um sicher zu gehen, daß die Dichtungsmasse frei von Lufteinschlüssen war.

Es wurde eine Fugendichtungsmasse nach folgender Rezeptur hergestellt:

| Material | Prozent |
|---|---|
| Vinnapas$^R$-Dispersion AF 75 | 40,50 |
| Dispergiermittel (Netzmittel) (auf Basis Natriumpolyphosphat) | 0,25 |
| Konservierungsmittel | 0,10 |
| Ammoniak | 0,10 |
| Titandioxid | 2,30 |
| Calciumcarbonat (Kreide) | 49,00 |
| Polypropylenglykolalkylphenylether | 7,00 |
| verzweigtes Organopolysiloxan mit aminofunktionellen Gruppen | 0,75 |
| | 100,00 |

**Vergleichsbeispiel**

Es wurde wie in Beispiel 1 vorgegangen, jedoch wurde kein verzweigtes Organopolysiloxan zugesetzt. Die 0,75 Gew.-% wurden der Kreide zugeschlagen.

| Material | Prozent |
|---|---|
| Vinnapas-Dispersion AF 75 | 40,50 |
| Dispergiermittel (Netzmittel) (auf Basis Natriumpolyphosphat) | 0,25 |
| Konservierungsmittel | 0,10 |
| Ammoniak | 0,10 |
| Titandioxid | 2,30 |
| Calciumcarbonat (Kreide) | 49,75 |
| Polypropylenglykolalkylphenylether | 7,00 |
| | 100,00 |

**Prüfung der Eigenhaftung**

Mit Hilfe des Raupentests wurde die Haftverbesserung der Dichtungsmasse bestimmt. Auf ausgewählte Untergründe, Aluminium, Glas und Betonoberflächen, wurden die Massen in Form von Dichtungsmassensträngen aufgebracht. Nach vollständiger Aushärtung (Lagerung bei Normaltemperatur 23°C und 50 % relativer Luftfeuchtigkeit) wurde versucht, die Massen vom Untergrund abzuziehen. Die Ergebnisse sind in Tabelle I aufgeführt.

**Beurteilung**

+ Gute Haftung, Kohäsionsriß (Der Dichtstoff reißt in sich)
- Schlechte Haftung (Adhäsionsriß)
Ø Teilhaftung, Zonenhaftung

Tabelle I

| | Beispiel 1 | Vergleichsversuch |
|---|---|---|
| Aluminium | + | - |
| Glas | + | Ø |
| Beton | + | - |

**Prüfung der Frühregenfestigkeit bei RT**

Die Acrylatmassen wurden in U-Schienen so eingebracht, daß die Oberfläche 50 $cm^2$ betrug, bei 23 °C und 50 % Luftfeuchtigkeit 1 Stunde gelagert und zu vorgegebenen Zeiten dem Wasserstrahl ausgesetzt. Die Beregnungszeit betrug jeweils 15 Minuten. Die Wassermenge betrug 300 l/min und der Aufschlagwinkel des Wassers wurde auf 45° eingestellt. In der Tabelle II ist der Masseverlust, bezogen auf die Masse vor der Beregnung, angegeben.

Tabelle II

| Trocknungszeit bei 25°C | 10 min | 30 min | 60 min | 90 min | 4 Stunden |
|---|---|---|---|---|---|
| Beispiel 1 | < 8 % | < 2 % | - | - | - |
| Vergleichsversuch | > 70 % | > 65 % | > 40 % | > 40 % | > 40 % |
| (Angaben in Gewichtsprozent) | | | | | |

**Prüfung der Frühregenfestigkeit bei niedriger Temperatur (Temp. = +5°C)**

Die Acrylatmassen wurden erneut in U-Schienen eingebracht und im Kühlschrank bei +5 °C gelagert. Nach vorgegebenen Zeitintervallen wurden Proben entnommen und wie vorstehend beregnet. Die Beregnungszeit betrug ebenfalls 15 Minuten. Die Ergebnisse sind in Tabelle III aufgeführt.

Tabelle III

| Trocknungszeit bei 25°C | 12 Stunden | 24 Stunden | 48 Stunden | 72 Stunden | 96 Stunden |
|---|---|---|---|---|---|
| Beispiel 1 | > 50 % | 12 % | - | - | - |
| Vergleichsversuch | 100 % | 100 % | 100 % | 95 % | 88 % |
| (Angaben in Gewichtsprozent) | | | | | |

## Patentansprüche

1. Dichtungsmassen auf der Grundlage von Dispersionen von Polymerisaten ethylenisch ungesättigter Monomeren umfassend die Komponenten
   a) Polymerisate ethylenisch ungesättigter Monomeren,
   b) 0,1 bis 5 Gew.-% verzweigte Organopolysiloxane, bezogen auf das Gesamtgewicht der Dichtungsmassen,
   c) Dispergiermittel,
   d) Füllstoff und
   e) Wasser.

2. Dichtungsmassen nach Anspruch 1, dadurch gekennzeichnet, daß Organopolysiloxane (b) der allgemeinen Formel (I),

$$R_aSi(R^1)_bO_{\frac{4-a-b}{2}}$$

in der R gleiche oder verschiedene einwertige gegebenenfalls substituierte über SiC gebundene $C_1$-$C_{18}$-Kohlenwasserstoffreste, $R^1$ gleiche oder verschiedene $C_1$-$C_6$-Alkoxygruppen oder Aminoalkylgruppen, a 0, 1, 2 oder 3, durchschnittlich 0,75 bis 1,5, und b 1, 2 oder 3, durchschnittlich 0,2 bis 2,0,

bedeutet, eingesetzt werden.

3. Dichtungsmassen nach Anspruch 2, dadurch gekennzeichnet, daß $R^1$ teilweise $C_1$-$C_6$-Alkoxygruppen und teilweise Aminoalkylgruppen bedeutet.

4. Dichtungsmassen nach Anspruch 1 bis 3, dadurch gekennzeichnet, daß die Komponente (a) ein Homo- oder Copolymerisat von Acrylsäure und Methacrylsäure und deren Ester aus primären oder sekundären Alkoholen mit 1 bis 12 C-Atomen mit gegebenenfalls anderen ethylenisch ungesättigten Monomeren ist.

5. Verfahren zur Herstellung der Dichtungsmassen gemäß Anspruch 1 bis 4, dadurch gekennzeichnet, daß die Polymerisate ethylenisch ungesättigter Monomeren (a) unmittelbar nach der Herstellung mit den verzweigten Organopolysiloxanen (b) versetzt werden.

## Claims

1. Sealing composition which is based on a dispersion of polymers of ethylenically unsaturated monomers comprising the components
   a) polymers of ethylenically unsaturated monomers,
   b) 0.1 to 5% by weight of branched organopolysiloxanes, based on the total weight of the sealing compositions,
   c) dispersing agent,
   d) filler and
   e) water.

2. Sealing composition according to Claim 1, characterized in that organopolysiloxanes (b) of the general formula (I)

$$R_aSi(R^1)_bO_{\frac{4-a-b}{2}}$$

in which R denotes identical or different monovalent, optionally substituted $C_1$-$C_{18}$-hydrocarbon radicals bonded via SiC, $R^1$ denotes identical or different $C_1$-$C_6$-alkoxy groups or aminoalkyl groups, a denotes 0, 1, 2 or 3, on average 0.75 to 1.5, and b denotes 1, 2 or 3, on average 0.2 to 2.0, are employed.

3. Sealing composition according to Claim 2, characterized in that $R^1$ denotes in part $C_1$-$C_6$-alkoxy groups and in part aminoalkyl groups.

4. Sealing composition according to Claims 1 to 3, characterized in that component (a) is a homo- or copolymer of acrylic acid or methacrylic acid or an ester thereof from a primary or secondary alcohol having 1 to 12 C atoms with, where appropriate, other ethylenically unsaturated monomers.

5. Process for the preparation of the sealing composition according to Claims 1 to 4, characterized in that the branched organopolysiloxanes (b) are added to the polymers of ethylenically unsaturated monomers (a), immediately after preparation thereof.

## Revendications

1. Compositions d'étanchéité à base de dispersions de polymères de monomères à insaturation éthylénique, comprenant les constituants suivants :
   a) des polymères de monomères à insaturation éthylénique,
   b) de 0,1 à 5 % en poids de polyorganosiloxanes ramifiés, par rapport au poids total des compositions d'étanchéité,
   c) un dispersant,
   d) une charge, et

e) de l'eau.

**2.** Compositions d'étanchéité selon la revendication 1, caractérisées en ce qu'on utilise des polyorganosiloxanes (b) de formule générale (I)

$$R_aSi(R^1)_bO_{(4-a-b)/2}$$

dans laquelle les radicaux R sont des radicaux hydrocarbonés en $C_1$-$C_{18}$, identiques ou différents, monovalents, éventuellement substitués, liés par une liaison SiC, les radicaux $R^1$ sont des groupes alcoxy en $C_1$-$C_6$ ou aminoalkyle éventuellement différents, a vaut 0, 1, 2 ou 3, en moyenne de 0,75 à 1,5, et b vaut 1, 2 ou 3, en moyenne de 0,2 à 2,0.

**3.** Compositions d'étanchéité selon la revendication 2, caractérisées en ce que $R^1$ représente pour partie des groupes alcoxy en $C_1$-$C_6$ et pour partie des groupes aminoalkyle.

**4.** Compositions d'étanchéité selon l'une des revendications 1 à 3, caractérisées en ce que le constituant (a) est un homo- ou un copolymère de l'acide acrylique et de l'acide méthacrylique et de leurs esters avec des alcools primaires ou secondaires ayant de 1 à 12 atomes de carbone, avec éventuellement d'autres monomères à insaturation éthylénique.

**5.** Procédé de fabrication de compositions d'étanchéité selon l'une des revendications 1 à 4, caractérisé en ce que les polymères de monomères à insaturation éthylénique (a) sont additionnés des polyorganosiloxanes ramifiés (b) immédiatement après la fabrication.